# EUROPEAN PATENT SPECIFICATION

(11) **EP 0 788 781 B1**
(45) Date of publication and mention of the grant of the patent: **02.01.2002**
(21) Application number: 96850030.6
(22) Date of filing: 12.02.1996
(51) Int. Cl.: A61C 8/00

(54) **Abutment screw**
Abstandsschraube
Vis d'espacement

(43) Date of publication of application: 13.08.1997
(73) Proprietor: Nobel Biocare AB (reg. no. 556002-0231), 402 26 Göteborg (SE)
(72) Inventor: Jörnéus, Lars, S-430 30 Frillesas (SE); Forsmalm, Göran, S-421 43 V. Frölunda (SE)
(74) Representative: Olsson, Gunnar

(56) References cited:
- EP-A- 0 291 103

## Description

The present invention relates to a spacer screw for fixation of a substantially sleeve-shaped spacer member to an anchoring member (fixture) permanently anchored in the jaw-bone.

The spacer screw has an outer threaded portion which engages with an internally threaded bore in the upper portion of the fixture, and an unthreaded waist (non thread-loaded section) which exceeds the thread diameter of the screw.

A spacer screw of this type is described in EP 0 291 103. The spacer screw is specifically used for a single-tooth restoration in which one fixture alone should be able to withstand all of the oral loadings such as torque, flexion and compressive forces. The torque loading is of particular importance as it strives to loosen the the screw connection between the spacer member and the fixture.

In said patent it is described a specific design of the spacer screw that increases the elastic flexion of the screw. Specifically, the screw has a non-thread loaded waist portion with a length in the longitudinal direction of the screw that exceeds the thread diameter of the threaded portion of the screw. The elastic flexion is concentrated to this waist portion and the screw is capable of absorbing a a substantially higher elastic flexion than previous spacer screws.

However, in addition to the oral torque loading other types of mechanical over-loading might occur in this type of implant systems. In case of an over-loading it is desirable that an exchangeable part of the implant system is broken instead of the fixture itself as the fixture cannot be exchanged.

In the previously known Brånemark System® method an implant system is used which has two separate screw connections in series, a lower screw connection for fixation of the spacer sleeve to the fixture and an upper screw connection for fixation of the prosthetic construction, for example a single tooth restoration, to the spacer sleeve. The upper screw connection can easily be exchanged if necessary as it is designed in such a way that it will fracture first in case of an over-loading. Under certain conditions in which the implant system is exposed to a continuous, increasing bending torque in the longitudinal direction of the implant system, it might happen that the lower screw connection is exposed to such an over-loading that it fractures first.

In such a case the spacer screw normally fractures at its threaded portion. This means that it is difficult to reach the screw stump remained in the interior of the fixture when repairing the implant. Furhermore, it might happen that the interior fixture thread is damaged due to the fraction so that it is more or less impossible to remove the remaining screw part.

The object of the present invention is to provide a lower screw connection which makes it easier to exchange the spacer screw in case of fracture. According to the invention the upper portion of the unthreaded waist of the spacer screw has a section of reduced tensile strength so that the tensile strength of the screw is reduced at this point compared with the threaded portion.

In case of a spacer screw fracture this means that the fracture site is located close to the opening in the fixture which means that the screw stump which is remained in the fixture bore can be easily reached and rotated out from the bore by means of a suitable sharp instrument or sond.

Of course such section of reduced tensile strength also means that the overall tensile strength for the spacer screw is reduced. In order to compensate for this, in a preferred embodiment of the invention, the thread profile has been changed compared with a conventional screw thread profile. Specifically the thread bottom is less deep than usually. Such a profile change can be made in this case as the corresponding thread profile for the inner thread of the fixture bore already are somewhat reduced. Also, the unthreaded shaft of the screw can be made somewhat larger, preferably with the same diameter as the thread bottom. The section of reduced tensile strength is then located between the screw head and the cylindrical waist shaft with the somewhat increased diameter.

In the following a preferred embodiment of the invention will be described more in detail with a reference to the accompanying drawing in which figure 1 is a section through an implant pillar system comprising an anchoring element (fixture) and a spacer and two screw connections in series, figure 2 a side view of the spacer screw and figure 3 a longitudinal section through the screw.

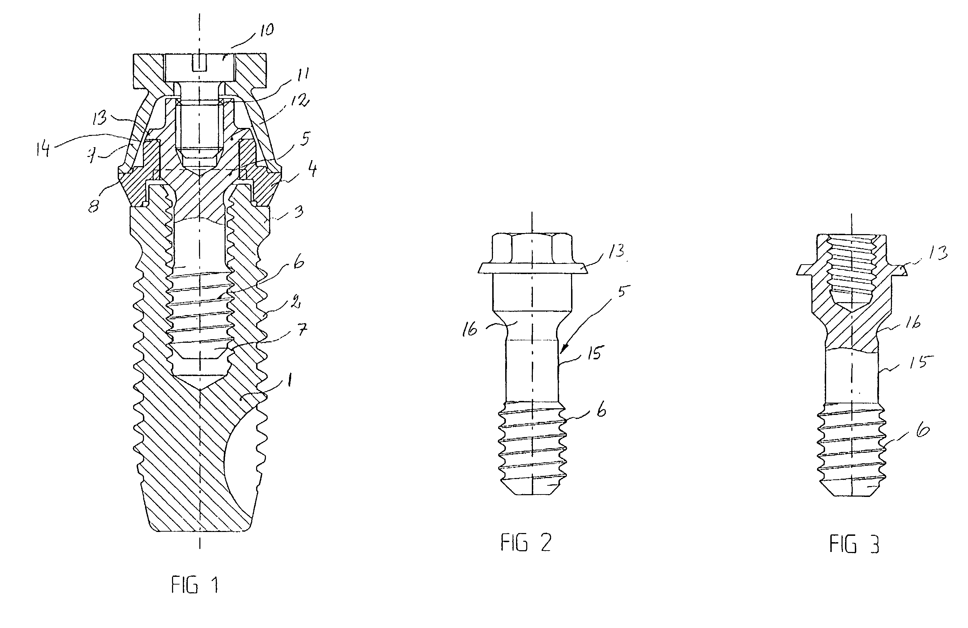

Figure 1 illustrates a so-called implant pillar comprising an anchoring element in the form of a cylindrical screw (fixture) 1 made of titanium and with an exterior threaded portion 2 to be inserted in a hole prepared in the jaw-bone for permanently anchoring a single tooth restoration. A spacer sleeve 4 is connected to the upper portion, the flange 3, of the fixture by means of a spacer screw 5 having a threaded portion 6 which engages with interiorally threaded bore 7 in the upper portion of the fixture for fixation of the spacer screw to the fixture.

The spacer sleeve 4 has an outer annular flange 8 against which the end portion of a conical gold cylinder 9 abuts. Such a conical gold cylinder might be a part of a conventional tooth prosthesis, see for instance the above-mentioned EP 0 419 431, and is connected to the spacer screw by means of a screw 10 which engages an interior threaded bore 11 in the screw head 12 of the spacer screw. The spacer screw 5 is provided with an annular flange 13 abutting the upper end surface 14 of the spacer sleeve.

Even if this type of implant pillars have two screw connections in series, which makes the system retrievable, they are still characterised by a comparatively low built-in construction. As already mentioned the implant pillar is specifically useful for single-tooth restorations and where excellent esthetic results are demanded.

As already discussed in the introductory portion such single-tooth restoration may be exposed to extreme oral loadings, such as torque, flexion and compressive forces. In order to absorb torsional forces the spacer screw 5 has an unthreaded waist 15 whose length exceeds the thread diameter of the screw so that elastic flexion is concentrated to this waist.

It was also mentioned that under some loading circumstances it might happen that there is a fracture in the lower screw connection (spacer screw 5) which is a problem as the fracture then occur in the threaded portion of the screw, specifically in some of the uppermost threads. It is then difficult to reach the remaining screw stump in the fixture bore and the inner thread in the bore is often damaged in connection with the fracture or when the broken screw is removed from the bore.

According to the invention the uppermost part of the waist of the spacer screw 5 has an indication of fracture 16, i e the indication of fracture is located on the waist furthest away from the threaded portion of the screw. As illustrated in figure 1, in case of a fracture, the fracture will be located on the screw very close to the outer end of the bore 7 of the fixture. In this case the remained screw stump can be easily reached and the risk that the interior thread is damaged during fracture or during removal of the broken screw is reduced.

The indication of fracture is preferably a reduced diameter section. For a 1 mm diameter screw the reduced diameter section may be 0.05 - 0.1 mm deep. Such a material reduction is sufficient for the fracture to occur at this point and the resulting overall reduction of the tensile strength of the screw can in most cases be accepted.

The reduction of tensile strength can be compensated, however, by making the screw in itself somewhat stronger. This can be achieved by changing the thread profile from the conventional, standard thread profile into a profile in which the thread bottom is less deep than usually, i e so that the shaft diameter (at the thread bottom) is increased. This does not effect the dimensions of the screw in other respects. Not only the shaft at the threaded portion but also the unthreaded waist shaft can be made with a somewhat larger diameter, preferably with the same diameter as the thread bottom diameter. These changes can be made without affecting the corresponding internal thread profile in the bore of the fixture as the thread tops are already somewhat "flattened".

The increased shaft diameter in the threaded portion of the screw also makes the thread profile somewhat "rounder" (less sharpness of thread bottom) which further reduces the risk of a fracture in the threaded portion.

## Claims

1. A spacer screw for fixation of a spacer member (4) to an anchorage member (fixture) (1) permanently anchored in the jaw-bone, said screw comprising a head portion (12) for cooperation with an annular shoulder (14) provided by said spacer member, a lower, externally threaded portion (6) screwable into an internally threaded bore (7) in the upper portion of the anchoring member and a non-thread loaded portion (waist) (15) located between said head portion and said externally threaded portion, **characterised by** said non-thread loaded portion (15) having a section of reduced tensile strength compared with the threaded portion (6) located on the non-thread loaded portion (15) close to the head portion (12).

2. Spacer screw according to claim 1, **characterised in that** said section of reduced tensile strength comprises an annular section of reduced material thickness, groove (16), made in the cylindrical outer surface of the non-thread loaded portion of the screw.

3. Spacer screw according to claim 2, **characterised in that** said annular section of reduced material thickness (16) has a depth which is 5 - 25 % of the non-thread loaded portion screw diameter.

4. Spacer screw according to claim 1, **characterised in that** the thread profile of said threaded portion (6) has been modified compared with a standard thread profile in such a way that the thread bottom is less deep than normal.

5. Spacer screw according to claim 1, **characterised in that** the length of the non-thread loaded portion (15) has a length that exceeds the thread diameter of the threaded portion (6) of the screw.

## Patentansprüche

1. Abstandsschraube zur Fixierung eines Abstandsglieds (4) an einem Verankerungsglied (1) (Fixtur), das im Kieferknochen permanent verankert ist, wobei die Schraube einen Kopfteil (12) zum Zusammenwirken mit einer Ringschulter (14), einen unteren Außengewindeteil (6), der in eine Gewindebohrung (7) im oberen Teil des Verankerungselementes einschraubbar ist, und einen vom Gewindeeingriff freien Teil (15) (Taille) zwischen dem Kopfteil und dem Gewindeteil aufweist,
**dadurch gekennzeichnet, daß** der vom Gewindeeingriff freie Teil (15) einen Abschnitt mit im Vergleich zu dem Gewindeteil (6) verringerter Zugfestigkeit aufweist, der an dem vom Gewindeeingriff freien Teil (15) nahe dem Kopfteil angeordnet ist.

2. Abstandsschraube nach Anspruch 1,
**dadurch gekennzeichnet, daß** der Abschnitt mit verringerter Zugfestigkeit einen ringförmigen Abschnitt von verringerter Materialdicke bzw. eine Nut (16) in der zylindrischen Außenfläche des vom Gewindeeingriff freien Abschnitts der Schraube aufweist.

3. Abstandsschraube nach Anspruch 2,
**dadurch gekennzeichnet, daß** der ringförmige Abschnitt mit verringerter Materialdicke (16) eine Tiefe hat, die 5-25% des Durchmessers des vom Gewindeeingriff freien Abschnitts der Schraube beträgt.

4. Abstandsschraube nach Anspruch 1,
**dadurch gekennzeichnet, daß** das Gewindeprofil des Gewindeabschnitts (5) im Vergleich mit einem Standard-Schraubenprofil derart modifiziert ist, daß die Gewindetiefe geringer ist als normal.

5. Abstandsschraube nach Anspruch 1,
**dadurch gekennzeichnet, daß** die Länge des vom Gewindeeingriff freien Abschnitts (15) eine Länge hat, die größer ist als der Gewindedurchmesser des Gewindeabschnitts (6) der Schraube.

## Revendications

1. Vis d'espacement pour la fixation d'un membre d'espacement (4) à un membre d'ancrage (garniture) (1) ancré de façon permanente dans l'os maxillaire, ladite vis comprenant une partie de tête (12) pour interagir avec un épaulement annulaire (14) fourni par ledit membre d'espacement, une partie inférieure à filetage extérieur (6) pouvant être vissée dans un alésage (7) à filetage intérieur dans la partie supérieure du membre d'ancrage et une partie chargée non filetée (ceinture) (15) située entre ladite partie de tête et ladite partie à filetage extérieur, **caractérisée en ce que** ladite partie chargée non filetée (15) présente une section de résistance à la rupture réduite par rapport à la partie filetée (6) située sur la partie chargée non filetée (15) à proximité de la partie de tête (12).

2. Vis d'espacement selon la revendication 1, **caractérisée en ce que** ladite section de résistance à la rupture réduite comprend une section annulaire d'épaisseur de matériau réduite, sillon (16), réalisée dans la surface extérieure cylindrique de la partie chargée non filetée de la vis.

3. Vis d'espacement selon la revendication 2, **caractérisée en ce que** ladite section annulaire d'épaisseur de matériau réduite (16) présente une profondeur comprise entre 5 et 25 % du diamètre de la partie chargée non filetée de la vis.

4. Vis d'espacement selon la revendication 1, **caractérisée en ce que** le profil de filetage de ladite partie filetée (6) est modifié par rapport à un profil de filetage standard de sorte que le creux du filet soit moins profond que dans la normale.

5. Vis d'espacement selon la revendication 1, **caractérisée en ce que** la longueur de la partie chargée non filetée (15) présente une longueur qui dépasse le diamètre du filet de la partie filetée (6) de la vis.
